# EUROPEAN PATENT APPLICATION

(11) **EP 4 525 244 A1**
(43) Date of publication of application: **19.03.2025**
(21) Application number: 23197846.1
(22) Date of filing: 18.09.2023
(51) Int. Cl.: H02J 1/10, H02J 3/36

(54) **APPARATUS FOR CONTROLLING A POWER CONVERTER IN A POWER TRANSMISSION NETWORK**

(71) Applicant: General Electric Technology GmbH, 5400 Baden (CH)
(72) Inventor: KUMAR, Amit, ST16 1WS Stafford (GB); BARKER, Carl, ST16 1WS Stafford (GB); SINGHAL, Sameer, ST16 1WS Stafford (GB)
(74) Representative: Openshaw & Co.

(57) **Abstract**

Example embodiments relate to systems, methods and/or systems, for example for controlling a power converter in a DC power transmission network. For example, an apparatus (14) may comprise means for regulating (14) the power output of a first power converter station (16) in a DC power transmission network (10) in response to the DC voltage (13) at the first power converter station (16) exceeding a first DC voltage threshold. The first DC voltage threshold is variable based on a current direction through a first transmission line (11b) coupled to the first power converter station (16).

## Description

### Field

The present invention relates to apparatus, methods and systems for controlling a power converter in a power transmission network.

### Background

A Voltage Source Converter High Voltage Direct Current (VSC-HVDC) station is a type of HVDC (High Voltage Direct Current) transmission system used for efficient and reliable long-distance power transmission. HVDC technology enables the transmission of large amounts of electrical power over long distances, typically between two AC (Alternating Current) systems that are not synchronized with each other.

There remains an ongoing need for further developments in this field.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect of the invention there is provided an apparatus comprising means for regulating the power output of a first power converter station in a DC power transmission network in response to a DC voltage at said first power converter station exceeding a first DC voltage threshold, wherein said first DC voltage threshold is variable based on a current direction through a first transmission line coupled to said first power converter station.

In some embodiments, the apparatus further comprises means for setting said first DC voltage threshold to one of a plurality of voltage values.

In some embodiments, said means for setting is configured to set said first DC voltage threshold to a first of said plurality of voltage values if said current direction is directed to a DC grid.

In some embodiments, said means for setting is configured to set said first DC voltage threshold to a second of said plurality of voltage values if said current direction is directed from said DC grid.

In some embodiments, said first of said plurality of voltage values is less than said second of said plurality of voltage values.

In some embodiments, the apparatus further comprises means for determining said current direction.

In some embodiments, the means for determining said current direction comprises a means for measuring a current magnitude at one or more locations at an interface between said first power converter station, said first transmission line and/or a second transmission line.

In some embodiments, the apparatus further comprises means for measuring said voltage at said first power converter station.

According to a second aspect of the invention, there is provided a system comprising: a first power converter station coupled to a first transmission line in a power transmission network; and a first controller for controlling the power output of said first power converter station into said first transmission line, wherein said first controller comprises an apparatus according to the first aspect.

In some embodiments, said first transmission line (11) is further coupled to a direct current power grid.

In some embodiments, said first transmission line (11) is further coupled to a second power converter station (12).

In some embodiments, said second power converter station (12) is an onshore power converter station and said first power converter station (16) is an offshore power converter station.

In some embodiments, said power transmission network is a symmetrical monopole, an asymmetric monopole or bipolar transmission network.

According to a third aspect of the invention, there is provided a method comprising regulating the power output of a first power converter station in a DC power transmission network in response to a DC voltage at said first power converter station exceeding a first DC voltage threshold, wherein said first DC voltage threshold is variable based on a current direction through a first transmission line coupled to said first power converter station.

In some embodiments, the method further comprises setting said first DC voltage threshold to one of a plurality of voltage values.

In some embodiments, said first DC voltage threshold is set to a first of said plurality of voltage values if said current direction is directed to a DC grid.

In some embodiments, said first DC voltage threshold is set to a second of said plurality of voltage values if said current direction is directed from said DC grid.

In some embodiments, said first of said plurality of voltage values is less than said second of said plurality of voltage values.

In some embodiments, the method further comprises determining said current direction.

In some embodiments, the determining said current direction comprises measuring a current magnitude at one or more locations at an interface between said first power converter station, said first transmission line and/or a second transmission line.

In some embodiments, the method further comprises measuring said voltage at said first power converter station.

According to a fourth aspect of the invention, there is provided a computer program comprising instructions for causing an apparatus to perform at least: any method as described with reference to the third aspect.

According to a fifth aspect, there is provided a non-transitory computer readable medium comprising program instructions for causing an apparatus to perform at least: any method as described with reference to the third aspect.

According to a sixth aspect, there is provided an apparatus comprising: at least one processor and at least one memory comprising code that, when executed by the at least one processor, causes the apparatus to perform (at least) any method as described with reference to the third aspect.

According to a seventh aspect of the invention, there is provided a controller for a converter device, comprising: a memory; and at least one processor; wherein the memory comprises computer-readable instructions which when executed by the at least one processor cause the controller to perform (at least) any method as described with reference to the third aspect.

It will also be appreciated that the use of the terms "first" and "second", and the like, are merely intended to help distinguish between similar features (for instance the first and second converter devices) and are not intended to indicate a relative importance of one feature over another, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief description of the drawings

Embodiments of the invention will now be described by way of example only and reference to the accompanying drawings, in which:
Fig. 1 is a schematic illustration (not to scale) showing a system, according to an embodiment.
Fig. 2 shows an apparatus, according to one or more example embodiments.
Fig. 3 is a flow diagram showing processing operations, according to one or more example embodiments.
Fig. 4 shows an apparatus, according to one or more example embodiments.

### Detailed description

A Multi-Terminal Voltage Source Converter High Voltage Direct Current (MT-VSC-HVDC) system is an advanced type of high voltage direct current (HVDC) transmission configuration that involves multiple VSC stations connected to a common DC transmission network. In a MT-VSC-HVDC system, three or more VSC stations are interconnected through a shared DC transmission line, forming a multi-terminal network.

Each VSC station in the MT-VSC-HVDC system may comprise (or act as) a rectifier or an inverter, allowing bidirectional power flow between the AC and DC grids they are connected to. The system operates based on the principle of voltage source control, where each VSC station acts as a controllable voltage source, providing active and reactive power control independently.

A VSC-HVDC system may comprise a symmetrical monopole VSC-HVDC system. A symmetrical monopole VSC-HVDC system may refer to a type of HVDC transmission configuration that uses a single transmission line (monopole) to connect two AC (Alternating Current) systems via VSC stations. In a symmetrical monopole VSC-HVDC system, the voltage and current may be distributed evenly, and the DC voltage may be centred around zero.

In a symmetrical monopole VSC-HVDC system, there is one VSC station located at each end of the transmission line. Each VSC station consists of a rectifier or an inverter, and both stations operate in a complementary manner to facilitate bidirectional power flow.

Example embodiments may relate to a HVDC system. In some example embodiments, the HVDC system comprises multiple terminals. In some example embodiments, at least one of the multiple terminals is an offshore terminal. In some example embodiments, at least one of the multiple terminals is an onshore terminal.

Example embodiments may relate to apparatus or methods of coordinating the response of a first power converter and a second power converter, for example in a multi-terminal configuration. The response of the power converters may comprise regulating the output power of the power converter. The response may include increasing or decreasing the output power of the power converter. The response may include increasing or decreasing the output voltage or current of the power converter. The response may be in response to measured quantities of signals from the power converter. For example, the measured quantities may include current and/or voltage measurements of the output signals from the power converter. The output signals may be alternating current or direct current signals.

In some example embodiments, the response may include limiting the maximum current from the first or second power converter. The maximum current may be determined based on the capability of a transmission line. This may reduce transmission losses between the power converters.

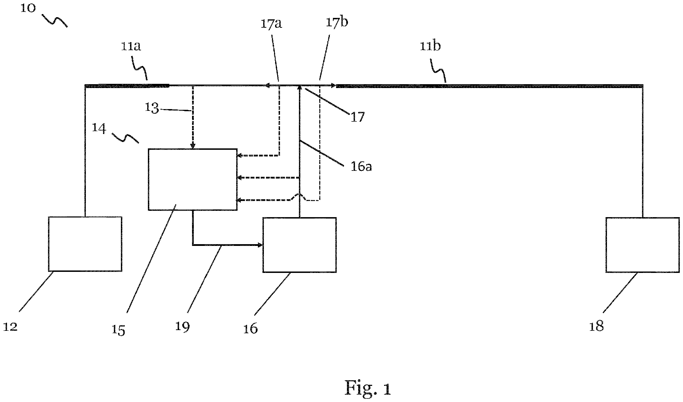

Fig. 1 is a schematic illustration (not to scale) showing a system 10, according to an embodiment. In this embodiment, the system 10 is a power transmission network. For example, the system 10 may comprise a bipole, symmetrical monopole or asymmetrical monopole VSC-HVDC system. The system 10 may comprise a MT-VSC-HVDC system.

In this embodiment, the system 10 comprises a first power converter 16, a second power converter 12 and a third power converter 18. The first power converter 16, second power converter 12 and third power converter 18 are connected to each other through a DC network. In some embodiments, the third power converter 18 may represent (or be connected to) a DC grid. One or more of the power converters 16, 12, 18 may be arranged to convert power from one or more electrical power generators. An electrical power generator may be driven by any source; for example, wind, solar, hydropower/electric, biomass, tidal or any other type of energy source. In some embodiments, one or more of the power converters 16, 12, 18 are part of one or more stations or terminals (not shown). The one or more stations may further comprise other apparatus; for example, electrical transformers configured to transform the voltage of incoming or outgoing electrical signals/currents.

In some example embodiments, one or more of the power converters 16, 12, 18 is configured to convert an electrical signal/current from an electrical power generator. For example, the one or more power converters 16, 12, 18 may convert an alternating current (AC) to a direct current (DC). Alternatively, or additionally, the one or more power converters 16, 12, 18 may convert DC to AC. For example, the one or more power converters 16, 12, 18 may comprise one or more of a rectifier or an inverter or a combination thereof.

In some example embodiments, the first, second and third power converters 16, 12, 18 may be located a substantial distance apart from one another; for example, one or more of the first, second or third power converters 16, 12, 18 may be an offshore power converter whilst one or more of the other power converters may be an onshore power converter. An onshore power converter may be configured to transmit power into a power grid; for example an AC power grid. For example the second power converter station 12 may be an onshore power converter station and the first power converter station 16 may be an offshore power converter station.

In this embodiment, the first, second and third power converters 16, 12, 18 are interconnected through interconnecting transmission lines. Transmission line 11a is coupled to the second power converter 12. Thus, the transmission line 11a connects the first power converter 16 to the second power converter 12. The first power converter 16 is connected to transmission line 11a at point of connection 17. Transmission line 11b is coupled to the third power converter 18 (e.g. a DC grid). Thus, the transmission line 11b connects the first power converter 16 to the third power converter 18. The first power converter 16 is connected to transmission line 11b at point of connection 17. Current 16b flows from the first power converter 16 to point of connection 17.

In some example embodiments, the first power converter 16 may be an offshore converter connected to a power generator (not shown). The second power converter 12 may be connected to a first power grid (not shown). The third power converter 18 may be connected to a second power grid (not shown). In some example embodiments, the first power grid is in a different country to the second power grid.

The system 10 comprises a first power converter 16 coupled to a first transmission line (e.g. transmission line 11a or transmission line 11b) in a power transmission network; and a first controller for controlling the power output of said first power converter 16 into said first transmission line. The first controller comprises an apparatus 14.

The first power converter 16 provides power through current 16a. The first power converter 16 is arranged to provide power to the second power converter 12 via transmission line 11a. The first power converter 16 is arranged to provide power to the third power converter 18 via transmission line 11b. In some embodiments, substantially all power from the first power converter 16 is transmitted to the second power converter 12 or the third power converter 18 via their respective transmission lines 11a, 11b. In some embodiments, the first power converter 16 may be arranged to provide a portion of power to the second power converter 12 and a portion of power to the third power converter 18 via transmission lines 11a and 11b respectively.

In this embodiment, the first power converter 16 is connected to an apparatus 14. The apparatus 14 comprises a means for regulating 15 the power output of the first power converter 16. For example, the apparatus 14 may be part of a power controller for a power converter or station. The apparatus 14 is arranged to measure a local voltage 13 at the first power converter 16. The local voltage 13 may be measured at a terminal of the first power converter 16; for example, at a local point of connection where the first power converter 16 is connected to the transmission lines 11a, 11b. The local voltage 13 is a DC voltage since the measurement is taken in the DC network.

The apparatus 14 may comprise a means for determining the current direction of the second current 17b. The means for determining may be arranged to measure the current direction through the transmission line 11b i.e. to/from the third power converter 18 (i.e. to/from the DC grid). For example, the apparatus 14/means for determining may be arranged to measure a first current 17a directed to the second power converter 12 (i.e. from the DC grid). The apparatus 14 may be arranged to measure a second current 17b directed to/from the third power converter 18 (i.e. to the DC grid). The first current 17a and second current 17b are DC currents; since the measurements are taken in the DC network.

The means for determining the current direction may comprise a means for measuring current magnitude at one or more locations at an interface between the first power converter 16 and transmission line 11a or transmission line 11b. In some embodiments, the current direction of the second current 17b may be determined based on measuring the current magnitudes of current 17a, current 17b and current 16a.

The means for regulating 15 may be configured to regulate the power output of the first power converter 16 based on a first voltage threshold. The first voltage threshold is a DC voltage threshold. For example, the means for regulating 15 may be configured to reduce the power output of the first power converter 16 in response to the measured local voltage 13 exceeding the first voltage threshold.

The first voltage threshold is variable. In some embodiments, the first voltage threshold may be changed between a plurality of voltage values. In some embodiments, the first voltage threshold may be changed between a first voltage value and a second voltage value. The voltage value of the first voltage threshold may be determined or calculated by a means for calculating the first voltage threshold. For example, the voltage value may be set such that the first voltage threshold may be lower than the protection setting of the DC voltage i.e. DC voltage at which the system 10 generates a fault signal. For example, the protection setting may be set to trip at 1.2pu DC voltage i.e. 0.2pu above the nominal value, then the nominal value of the first voltage threshold may be set to 1.1pu (for example, in normal operation). Faster power curtailment (compared to the normal operation) may be achieved by setting the first voltage threshold to a lower voltage value; for example, 1.05pu. The voltage value of the first voltage threshold may be determined based upon the current direction (and/or current magnitude) to/from the third power converter 18 (i.e. to/from the DC grid). Thus, the apparatus 10 may further comprise a means for determining the current direction. For example, the means for determining the current direction may comprise a means for measuring the current magnitude at one or more locations at an interface between the first power converter station 16 and the transmission line 11a and/or transmission line 11b. In some embodiments, the means for determining the current magnitude may be a current sensor.

The apparatus 15 may comprise a means for setting the first (DC) voltage threshold to one of the plurality of values. The means for setting may be configured to set said first DC voltage threshold to a first of said plurality of voltage values if said current direction (of the second current 17b) is directed to the third power converter 18 (e.g. to the DC grid). The means for setting may be configured to set said first DC voltage threshold to a second of said plurality of voltage values if said current direction (of the second current 17b) is directed from the third power converter 18 (e.g. to the DC grid).

For example, the first voltage threshold may be set to a first voltage value if the current direction of the second current 17b is directed directed towards the third power converter 18 e.g. current 17b is flowing into the DC grid.

In another example, the first voltage threshold may be set to a second voltage value if the current direction of the second current 17b is directed away from the third power converter 18 e.g. the current 17b is flowing from the DC grid.

In some example embodiments, the first voltage value is less than the second voltage value. This may mean that the apparatus 14 reduces the output power of the first power converter 16 in response to a lower local voltage 13 if the current direction of the second current 17b is directed to the third power converter 18 (e.g. to the DC grid) (compared to the local voltage 13 directed to the second power converter 12 e.g. from the DC grid). This may mean that the apparatus 14 reduces the output power of the first power converter 16 in response to a higher local voltage 13 if the current direction of the second current 17b is directed from the third power converter 18 (e.g. from the DC grid) (compared to the local voltage 13 substantially directed to the third power converter 18 e.g. to the DC grid).

In some example embodiments, the apparatus 10 further comprises a means for measuring a current rate through the transmission line 11a or transmission line 11b. The variability of the first voltage threshold may be further based on the measured current rate through the transmission line 11a or transmission line 11b being below a rate threshold. For example, the first voltage threshold may not change if the measured current rate is greater than the rate threshold. In other words, the first voltage threshold may not change for fast power flow changes.

In some example embodiments, the means for regulating 15 the power output of the first power converter 16 may comprise a datalink 19 to the first power converter 16. The means for regulating 15 may determine an updated power output of the first power converter 16. For example, the means for regulating 15 may regulate the power output of the first power converter 16 in response to the measured voltage 13 exceeding the first voltage threshold. The first voltage threshold may be variable i.e. the voltage value of first voltage threshold may be dynamic (i.e. changed) depending on the current direction of the second current 17b e.g. to or from the third power converter 18 (e.g. to/from the DC grid). For example, the first voltage threshold may be changed based on the current direction of 17b, this may be determined based on one or more of the measured first current 17a, measured second current 17b and/or measured current 16a. For example, as discussed above, the first voltage threshold may be one of a first voltage value or a second voltage value.

For example, the means for regulating 15 may be configured to perform/implement a frequency sensitive method. A frequency sensitive method may include a control algorithm configured to adjust the power output based on changes in the frequency of an AC power grid. In another example, the means for regulating 15 may be configured to perform/implement a direct power control command. A direct power control command may include a control algorithm that directly adjusts the active and reactive power of the power converter; this may be based on a voltage vector and a power error calculation.

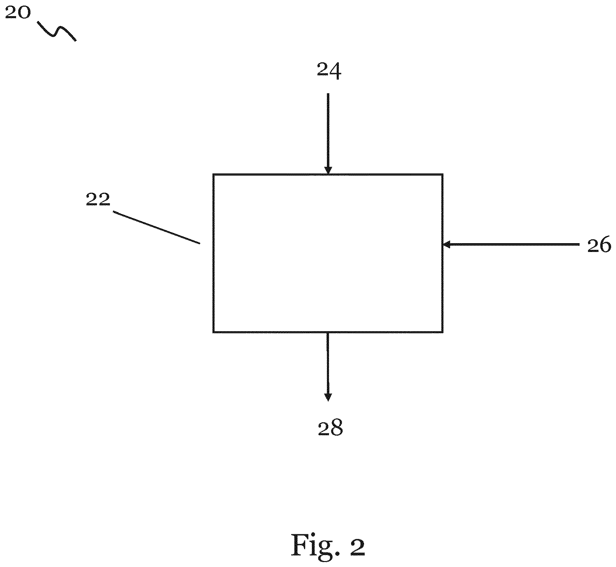

Fig. 2 shows an apparatus, indicated generally by reference numeral 20, according to one or more example embodiments.

The apparatus 20 may comprise a means for regulating 22 the power output of a first power converter (not shown) in a power transmission network (not shown) such as the power transmission network 10. The means for regulating 22 may be the same as means 15 described in more detail earlier above with respect to Fig. 1.

The apparatus 20 may comprise a means for regulating 22 the power output of a power converter in a power transmission network. For example, the apparatus 20 may be part of a first power controller for a first power converter or station (not shown). The apparatus 20 may be arranged to measure a local voltage 24 at the first power converter (e.g. first power converter 16 in Fig. 1). The apparatus 20 may be arranged to measure a current direction 26 through a first transmission line coupled to the first power converter (e.g. the current direction 26 may be measured at point 17b in Fig. 1). The current direction 26 may be to or from a third power converter (such as third power converter 18) or a DC grid. The means for regulating 22 may be configured to regulate the power output of the first power converter 16 based on a first voltage threshold. For example, the means for regulating 22 may be configured to reduce the power output of the first power converter 16 in response to the measured local voltage 24 exceeding the first voltage threshold.

In some example embodiments, the first voltage threshold is variable. In some embodiments, the first voltage threshold may be changed between a plurality of voltage values. In some embodiments, the first voltage threshold may be changed between a first voltage value and a second voltage value. The voltage value of the first voltage threshold may be determined based upon the measured current direction 26.

For example, the first voltage threshold may be set to a first voltage value if the current direction 26 is directed to a DC grid (for example, third power converter 18 in Fig. 1).

In another example, the first voltage threshold may be set to a second voltage value if the current direction 26 is directed from a DC grid (for example, third power converter 18 in Fig. 1).

In some example embodiments, the first voltage value is less than the second voltage value. This may mean that the apparatus 20 reduces the output power of the first power converter at a lower local voltage 24 if the current direction 26 is to the DC grid (for example, third power converter 18 in Fig. 1). This may mean that the apparatus 20 reduces the output power of the first power converter at a higher local voltage 24 if the current direction 26 is from the DC grid (for example, third power converter 18 in Fig. 1).

In some example embodiments, the means for regulating 22 the power output of the power converter may comprise a datalink 28 to the power converter. The means for regulating 22 may determine an updated power output of the power converter. For example, the means for regulating 22 may regulate the power output of the power converter in response to the measured voltage 24 exceeding the first voltage threshold. The first voltage threshold may be variable i.e. the voltage value of first voltage threshold may be dynamic (i.e. changed) depending on the measured current direction 26. For example, as discussed above, the first voltage threshold may be one of a first voltage value or a second voltage value.26.

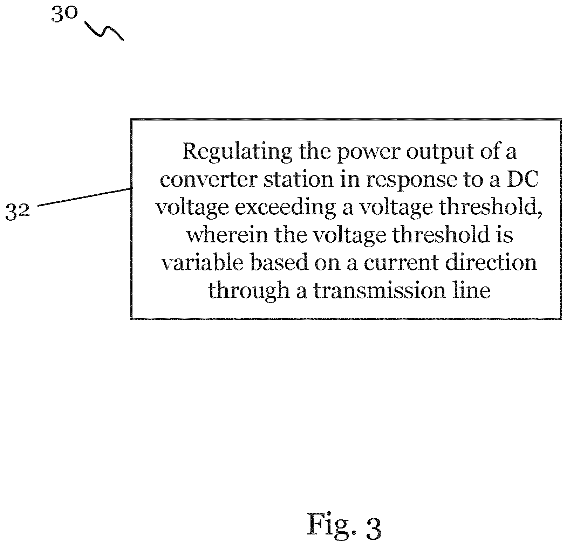

Fig. 3 is a flow diagram showing processing operations, indicated generally by reference numeral 30, according to one or more example embodiments. The processing operations 30 may be performed in hardware, software, firmware, or a combination thereof. For example, the processing operations 30 may be performed by the apparatus 14 or apparatus 20 shown in Figs. 1 and 2.

A first operation 32 may comprise regulating the power output of a first power converter station in a DC power transmission network in response to a DC voltage at said first power converter station exceeding a first DC voltage threshold, wherein said first DC voltage threshold is variable based on a current direction through a first transmission line coupled to said first power converter station.

In some example embodiments, the first voltage threshold may be determined based on the direction of a DC current to/from a DC grid (for example, to/from third power converter 18 / DC grid in transmission lines 11a, 11b Fig. 1).

It should be noted that certain of the process steps depicted in the flowchart of Figure 3 and described above may be omitted or such process steps may be performed in differing order to that presented above and shown in Figure 3. Furthermore, although all the process steps have, for convenience and ease of understanding, been depicted as discrete temporallysequential steps, nevertheless some of the process steps may in fact be performed simultaneously or at least overlapping to some extent temporally.

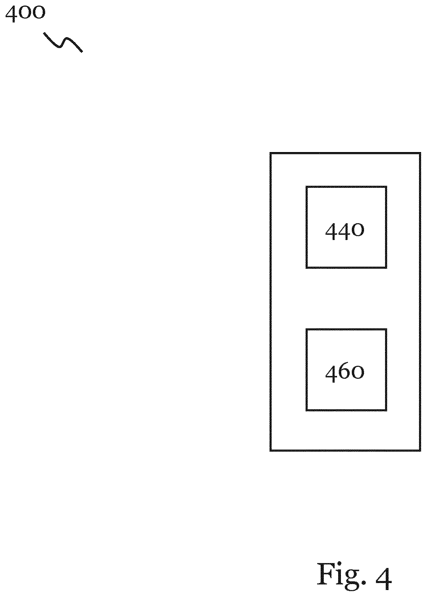

Fig. 4 shows an apparatus, indicated generally by reference number 400, according to one or more example embodiments. The apparatus 400 may be configured to execute the operations described herein, including those mentioned in any disclosed procedure. The apparatus 400 may comprise at least one processor 440 and one memory 460, directly or closely interconnected to the processor 440. The memory 460 may hold a computer program code (software). The arrangement of at least one processor 440, at least one memory 460, and computer program code may facilitate the execution of any method described herein, such as disclosed in the related flow diagrams.

Apparatus, (including the means for regulating 15, means for regulating 22, means for setting the first (DC) voltage threshold, means for determining the current direction, means for measuring a current magnitude, means for measuring the voltage and/or means for calculating a voltage threshold) for implementing the above arrangement, and performing the method steps to be described above (e.g., with respect to Figure 3), may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine-readable storage medium such as computer memory, a computer disk, ROM, PROM etc., or any combination of these or other storage media.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus (20) comprising:
means for regulating (22) the power output of a first power converter station in a DC power transmission network in response to a DC voltage at said first power converter station exceeding a first DC voltage threshold, wherein said first DC voltage threshold is variable based on a current direction through a first transmission line coupled to said first power converter station.

2. The apparatus (20) according to claim 1, further comprising means for setting said first DC voltage threshold to one of a plurality of voltage values.

3. The apparatus (20) according to claim 2, wherein said means for setting is configured to set said first DC voltage threshold to a first of said plurality of voltage values if said current direction is directed to a DC grid.

4. The apparatus (20) according to claim 3, wherein said means for setting is configured to set said first DC voltage threshold to a second of said plurality of voltage values if said current direction is directed from said DC grid.

5. The apparatus (20) according to claim 4, wherein said first of said plurality of voltage values is less than said second of said plurality of voltage values.

6. The apparatus (20) according to any preceding claim, further comprising means for determining said current direction.

7. The apparatus (20) according to claim 6, wherein said means for determining said current direction comprises a means for measuring a current magnitude at one or more locations at an interface between said first power converter station, said first transmission line and/or a second transmission line.

8. The apparatus (20) according to any preceding claim, further comprising means for measuring said voltage at said first power converter station.

9. A system (10) comprising:
a first power converter station (16) coupled to a first transmission line (11) in a power transmission network; and
a first controller for controlling the power output of said first power converter station (16) into said first transmission line (11), wherein said first controller comprises an apparatus (14) according to any preceding claim.

10. The system (10) according to claim 9, wherein said first transmission line (11) is further coupled to a direct current power grid.

11. The system (10) according to claim 9 or claim 10, wherein said first transmission line (11) is further coupled to a second power converter station (12).

12. The system (10) according to claim 11, wherein said second power converter station (12) is an onshore power converter station and said first power converter station (16) is an offshore power converter station.

13. The system (10) according to any one of claims 9 to 12, where said power transmission network is a symmetrical monopole, an asymmetric monopole or bipolar transmission network.

14. A method (30) comprising:
regulating (34) the power output of a first power converter station in a DC power transmission network in response to a DC voltage at said first power converter station exceeding a first DC voltage threshold, wherein said first DC voltage threshold is variable based on a current direction through a first transmission line coupled to said first power converter station.

15. The method (30) of claim 14, further comprising setting said first DC voltage threshold to one of a plurality of voltage values.
